# EUROPEAN PATENT APPLICATION

(11) **EP 4 280 563 A1**
(43) Date of publication of application: **22.11.2023**
(21) Application number: 22173404.9
(22) Date of filing: 16.05.2022
(51) Int. Cl.: H04L 51/18

(54) **A TRUSTABLE E-MAIL SYSTEM AND METHOD**

(71) Applicant: Consulare sàrl, 1204 Geneva GE (CH)
(72) Inventor: Le Berre, Philippe, 1290 Versoix (CH)
(74) Representative: Odoom, Ernest

(57) **Abstract**

The present disclosure describes a system and a method for allowing a recipient of an e-mail to verify, in a simple and convenient manner, whether the e-mail originates from a source from which the e-mail purports to originate. The method involves allowing a legitimate sender of an e-mail to embed into its e-mail, for the attention of a recipient, a 1-dimensional or 2-dimensional graphical code, or similar optical machine-readable data representation, representing a set of e-mail information selected from within the e-mail header section, e-mail body section or other information from the e-mail and signed with a private key owned by the sender. The sender provides a mobile application which enables a recipient of its e-mails to verify the optical machine-readable data representation and to receive an indication from the sender as to whether the e-mail is genuine or not. The mobile application exchanges data with the sender's information system thus allowing the sender to be aware of phishing attempts against potential recipients of its e-mails.

## Description

### TECHNICAL DOMAIN

The inventive concepts described herein relate generally to the domain of data processing, especially where such data processing involves the transmission of electronic information between processing systems for the attention of a human recipient, otherwise known as electronic messaging. More particularly, embodiments described herein may be used to allow a human recipient of an electronic message to verify whether the electronic message was sent by a reliable, or trustable, sender. A preferred embodiment may find use in the field of authentication of e-mail messages.

### BACKGROUND

Communication by electronic mail (e-mail) is a convenient and, for the most part, a reliable method for businesses and their clients to communicate with each other. For most people, e-mail communication has now become an accepted, or even the preferred, means of communication for both business-related and personal communications. However, it is becoming more and more difficult for recipients of e-mail messages to discern whether an e-mail message arriving at their e-mail server can be trusted i.e., whether an e-mail, which gives the appearance of having been sent by a particular person or entity, really was sent by that person or entity.

Phishing is a well-known problem in the domain of electronic communication, where an unscrupulous third party disguises an e-mail sent to a user, to make it look as if the e-mail came from a particular authority, usually an authority from whom the user would have expected to receive an e-mail. In such cases of phishing, it can be very difficult for a user to detect that an e-mail does not actually originate from the source whence the e-mail purports to originate. Users may thus be duped into providing confidential or otherwise compromising information, such as credentials for example, to unscrupulous third parties, thinking that they were communicating with a trusted authority.

The rather high risk of exposing clients to possible phishing attacks thus dissuades certain businesses, like banks for example, from using e-mail as a communication channel for communicating with their clients, whereas many clients would prefer to be able to communicate using that channel.

One of the well-known methods for allowing recipients of e-mail messages to authenticate the e-mail is an encryption programme known as the PGP security programme (Pretty Good Privacy). It provides cryptographic privacy and authentication of data communications. PGP is a rather complicated and somewhat cumbersome system however and, as such, did not gain much traction in the industry.

Known methods for combatting phishing attacks include those which embed supplemental information in the e-mail header to allow the recipient's e-mail server or its e-mail client to be able to automatically block, or otherwise mark, an e-mail message as potentially being a fake. For example, known authentication protocols include the e-mail validation system known as Sender Policy Framework (SPF), which is designed to detect e-mail spoofing by providing a mechanism to allow receiving e-mail exchangers to check that the incoming mail from a domain is indeed being sent from a host that is actually authorised by that domain's administrator. The list of authorised sending hosts for a domain may be published in the Domain Name Server (DNS) records for that domain. According to the Simple Mail Transfer Protocol (SMTP) any computer is allowed to send an e-mail claiming to be from any source address, The SPF protocol allows the owner of an Internet domain to specify which computers are authorised to send e-mail with sender addresses in that domain, using DNS records. Receivers can therefore verify the SPF information and reject any messages coming from unauthorised sources.

Another known validation system is called DomainKeys Identified Mail (DKIM), which allows for e-mail spoofing to be detected by providing a mechanism to allow receiving mail exchangers to check that an incoming e-mail mail from a domain is authorised by that domain's administrators. A digital signature included with the message is validated by the receiving mail exchanger using the signer's public key published in the DNS. Modules which sign and which verify are usually part of a mail transfer agent (MTA).

United States patent application publication number 20190312729A1 discloses an exemplary system implementing the SPF and DKIM methods described above. In this case, a customised SPF authentication process is performed, in which the header information related to the FROM address is analysed first. Sometimes an e-mail may be sent by a first company, claiming to be sent on behalf of a second company. In such a case, checking the sender first may result in checking the first company's servers via SPF or Sender ID, which will successfully authenticate. By checking the "from:" header first, it can be determined whether the second company authorized the first company to send an e-mail message on behalf of the second company.

Mechanisms employed in the prior art examples mentioned above, and others which involve the use of SPF and DKIM generally, all rely on the ability of a programme to check, via a certificate, that a specific header is valid. They do not involve the recipient itself performing an action and neither do they involve the use of a tool which is separate from the e-mail chain.

United States patent publication number 7422115B2 deals with techniques to defeat phishing and discloses a protocol for protected e-mail transmission in which a special logo is displayed in an e-mail's header to indicate to a recipient of the e-mail that the e-mail has been verified, by an e-mail authentication server, as coming from a reliable source. In the system disclosed in the patent mentioned above, the authentication server is separate from the reliable source. Similar to the other systems mentioned, the recipient is not the one who initiates the authentication. In this case the authentication is carried out by a third party. The authentication service is provided as a paid service. Furthermore, the reliable source does not receive any feedback as to how the recipient reacted to having received the e-mail nor whether the recipient received phishing attempts from other senders purporting to be the reliable source.

### BRIEF SUMMARY OF THE INVENTION

In the present document, a trustable electronic message shall be taken to mean an electronic message which comes from a trustable source. In other words, a trustable electronic message is one which originates from a first source and does not contain information designed, or otherwise intended, to lead a recipient of the message to believe that the message originates from another source which is not that first source. Embodiments described herein may be deployed in an e-mail server for example. Other embodiments may find use in other types of electronic messaging systems and services, such as SMS or MMS, for example.

A goal of the embodiments described herein is to allow a recipient of an electronic message, such as an e-mail, to conveniently detect whether a received e-mail is a trustable e-mail or whether it is a phishing attempt. A further goal is to allow a sender of an e-mail to provide recipients to whom the e-mail is addressed with the ability to conveniently verify whether the e-mail originated from the sender. A still further goal is to allow the sender to gain statistical information as to how many times potential recipients of their e-mails receive un-trustable e-mails purporting to originate from the sender.

According to a first aspect, there is disclosed herein a computer implemented method for sending a trustable e-mail to at least one recipient, the trustable e-mail having a content including: a message section comprising a subject-matter for communicating to the recipient; and a header section comprising at least information allowing for the trustable e-mail to be identified; the method comprising:
generation of an optical machine-readable data representation by a computing system of the sender, said generation being parameterised according to a configuration profile stored in a memory accessible to the computing system of the sender, the configuration profile comprising one or more instructions to cause at least a part of said header section of the trustable e-mail to be encoded in the optical machine-readable data representation;
embedding, by the computing system of the sender, the optical machine-readable data representation in the trustable e-mail before said sending; and
logging the thus sent trustable e-mail on a storage device accessible to the computing system of the sender, said log at least identifying the trustable e-mail and the configuration profile.

According to a second aspect, a method is disclosed for providing a computer implemented method for verifying whether an e-mail is a trustable e-mail sent using the method recited above, the method comprising:
retrieving, by a computing system of the sender, a log of a previously sent e-mail as referenced in a message received from a recipient of the e-mail, said message comprising data decoded, by a computing system of a recipient of the e-mail, from an optical machine-readable data representation embedded in the e-mail; and
verifying, by the computing system of the sender, whether at least a part of said decoded data matches at least a part of the header section of the referenced previously sent e-mail.

According to a third aspect, a computer implemented method for verifying whether an e-mail is a trustable e-mail sent by a sender using the method recited above is presented, the method comprising:
scanning and decoding an optical machine-readable data representation in the e-mail by a recipient of the e-mail using a recipient computing system;
sending at least a part of the decoded optical machine-readable data representation to the computing system of the sender;
retrieving, by the computing system of the sender, a log of a previously sent e-mail as referenced in the decoded optical machine-readable data representation; and
verifying, by the computing system of the sender, whether at least a part of said decoded data matches at least a part of the header section of the referenced previously sent e-mail.

Embodiments of the present invention allow the receiving party of an e-mail to initiate a process for authenticating the e-mail using a preferably secure application which communicates with a back-end server of the reliable source from where the e-mail is purported to have originated. The application may be run on a mobile communications device of said recipient, the mobile communications device having been previously registered, at the back-end server, as belonging to the recipient, preferably using a unique identifier of the mobile communications device. In this way, information from an e-mail header which is usually hidden from the recipients can be exploited by expressly bringing it to the recipient's attention in a very conspicuous but user-friendly manner, thus offering a convenient method for verifying whether the e-mail is trustable. The inventive method also provides an opportunity for the sender of trustable e-mails described herein to keep track of whether its e-mails have been received and whether recipients to whom the sender may send an e-mail have fallen victim to any phishing attempts by malicious third parties disguising their e-mails to look as if they came from the sender of trustable e-mails described herein.

### BRIEF DESCRIPTION OF THE DRAWINGS

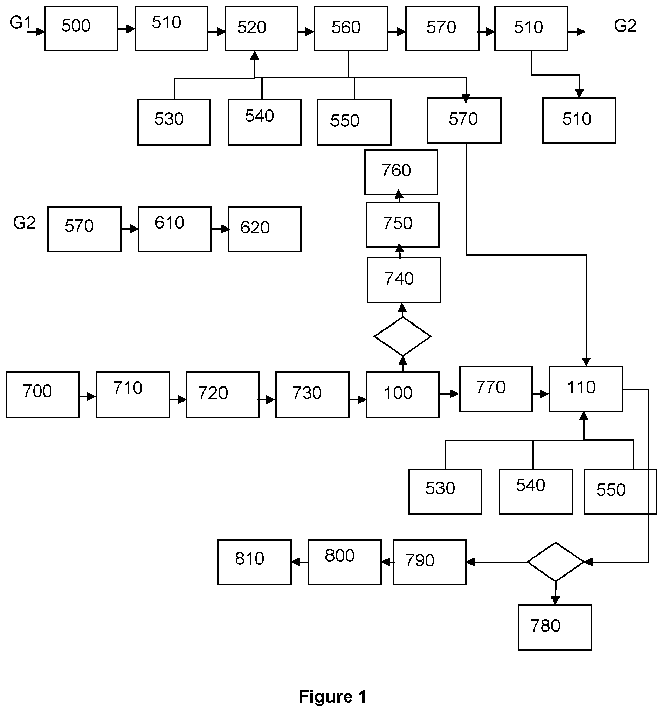

The inventive concepts described herein will be better understood thanks to the detailed description which follows and the accompanying drawing, which is given as a non-limiting example of one or more embodiments of the inventive concepts. Figure 1 provides a schematic illustration of some of the processes which may be involved in a method for generating a trustable e-mail according to an embodiment of the invention as well as some of the processes which may be involved in a method for verifying whether a received e-mail is a trustable e-mail, issued by the known sender from whom the e-mail purports to have been sent.

### DETAILED DESCRIPTION

Embodiments described herein provide a method for allowing a recipient of an e-mail to readily determine whether a received email purporting to have been sent by a given entity actually was sent by that entity. In other words, the method allows for the recipient of the e-mail to determine whether the e-mail is a trustable e-mail.

The method provides for a sender of an email to automatic embed an optical machine-readable data representation into the body of the email before sending. An example of a machine-readable data representation is a QR code. According to an embodiment, the optical machine-readable data representation encodes information extracted from the e-mail. This information may be extracted from anywhere within the e-mail, including from the body of the e-mail. In a preferred embodiment, the information to be encoded in the machine-readable date representation is extracted from the header of the e-mail. In some embodiments, the encoded information is further cryptographically signed using a private key of a private-public key pair of asymmetric cryptographic keys belonging to the sender of the e-mail. The sender may provide an application to potential recipients of its e-mails, so that when a recipient receives an e-mail purporting to have been sent by the sender, the recipient may scan the optical machine-readable code and communicate the result of the scan back to the sender, who can then verify whether the e-mail was sent by the sender or not. This method provides a further advantage in that it allows the sender to keep up to date on any phishing attempts that may have been made on potential recipients of its e-mails by malicious third parties.

Figure 1 shows a schematic diagram of a number of process steps involved in the trustable e-mail method according to an embodiment of the invention. With respect to figure 1, a genuine e-mail, created by the sender, is labelled G1. A series of process steps, numbered from 500 to 590, may be carried out by the sender at a computerised e-mail system of the sender 510.

At step 500, the genuine e-mail content G1 is drafted by the sender at its computerised e-mail system 510. An optical machine-readable data representation Q1 is generated using an optical code generation tool 520. A suitable optical machine-readable data representation may be a QR code for example ("Quick Reference" code), which is a widely used standard being readily generated and is easily scannable for subsequent verification. A step of conversion 560 of the genuine e-mail into a trustable e-mail G2 is carried out using a trustable e-mail converter, which embeds the optical machine-readable data representation of the extracted information from the genuine e-mail into a part of the trustable e-mail G2. Preferably, the optical machine-readable data representation is embedded into the body of the e-mail, where it can be readily viewed and scanned by the recipient of the trustable e-mail G2. The trustable email G2 is then sent by the sender's e-mail system 510 and may be archived at the sender's server, for example in a "sent" folder 580, proving that the e-mail was actually sent.

For the generation of the optical machine-readable data representation Q1 at step 520, the sender's e-mail system may refer to an e-mail protection profile 530. The e-mail protection profile may vary depending on which intended recipient the e-mail is to be addressed. For example, the e-mail protection profile may be a configuration file, by e-mail recipient, specifying which information from the e-mail should be used for generating the optical machine-readable data representation Q1 and/or whether the optical machine-readable data representation is to include a signature and if so, which private key to use for the signing. The code generator 520 may use a private encryption key pertaining to the sender 540 to sign the code Q1. At 550, a further parameter used by the code generator includes information extracted from the e-mail. Preferably, the type of information used here is information allowing the e-mail to be uniquely identified or tracked. This is the information which provides entropy to the scheme. E-mail headers include parts which can serve to provide such unique tracking capability. For example, they include dates and times, such as the time the message was generated, a message identifier, and so on. An audit log 590 may be kept at the sender's computing system, including this identification part, to log that an e-mail having a certain identification was generated using a certain protection profile for a given recipient, for example.

As mentioned, the information 550 for generating the optical machine-readable date representation may come from any part of the e-mail, as long as it provides some unique information about the e-mail which can be used for tracking purposes. According to a preferred embodiment however, the information is extracted from the e-mail header. An e-mail header is a section of code that contains information about where the email came from (e.g. a user name, e-mail address or computer identifier), a message identifier, a date and time that the message was created, the intended recipient's e-mail address and so on. Further information may get added to the e-mail header by various MTAs, as mentioned above, as different servers add date and timestamp information to indicate how the message reached its destination. Also, as mentioned above, the MTAs may add SPF information and/or DKIM digital signatures to the header.

In figure 1, the trustable e-mail G2, generated at step 570, is sent to the recipient and arrives at the recipient's INBOX at step 610. The trustable e-mail G2 may then be displayed to the recipient at step 620. Of course, if the e-mail has no optical machine-readable data representation embedded, such as a QR code, the recipient can immediately assume that the e-mail is not a trustable e-mail.

At the recipient's side, a number of steps may be carried out to verify whether the e-mail is a trustable e-mail, preferably using a computing system of the recipient in which a secure application 700 for checking the trustworthiness of e-mails has been installed. At step 720, the optical machine-readable data representation visible in the e-mail, preferably in the body, is scanned and at step 730 it is decoded. The application on the recipient's computing system, which may be a mobile communications device for example, may do a primary check, at step 100, to verify whether the data representation is a valid one. For example, it may check that the data extracted from the data representation corresponds to the recipient and/or it may check the accuracy of checksums in the decoded data. If the code checks out as being valid, then the process may go on. Otherwise, an alert 740 may be sent to the recipient. An alert 750 may also be returned to the sender, the sender possibly being the one who provided the application for checking for trustable e-mails. This way the sender can keep track of which recipients have received e-mails containing fraudulent optical machine-readable data representations. The sender may log such phishing attempts 760.

In the next part of the process, which is entered if the optical machine-readable data representation was found to be valid, the data extracted from the code is sent to the sender's computing system at step 770. The sender may then use the e-mail audit log 590 to find which e-mail protection profile 530 was used for that message. If the code was signed or encrypted, then the public key of the sender 541 may be used to check, at 110, whether unique identifying information 550 from the e-mail corresponds to the trustable e-mail. If this check is positive, then a message 780 may be sent to the recipient confirming that it is a trustable e-mail. Otherwise, the recipient may be notified 810 that the e-mail is not to be trusted and a log 790 may be kept at the sender's computing system. The notification 810 may be delivered to the recipient via a mobile application 800.

By convention, e-mail browsers usually only show a part of the e-mails' headers. The part of a header which is generally shown includes such fields as the From Address, To Address, Subject, Date and Time, Reply-To Address, CC, and BCC, for example. This part of the header may be called may be called the address part. The address part may also include a message identification number. As such, at least part of the address part of an e-mail can be used for identification purposes. Other parts of the header, including timestamps and server identification information related to the route that the e-mail took to get to the INBOX or information to do with different checks which were made on the e-mail, e.g., using SPF and DKIM, are usually hidden from the recipient of the e-mail. This part of the header may be called diagnostics part. At least a part of the diagnostics part may also be used for identification purposes. Embodiments of the present invention exploit this usually hidden part of a header in a way which renders it visible again in a very user-friendly manner, where its presence in the body of the message, in the form of an optical machine-readable data representation, is a visual indicator that the e-mail may be a trustable e-mail. The recipient can readily scan the optical machine-readable data representation, decode it and send it to the sender's server and have the sender confirm whether or not the e-mail came from them. Thus, in embodiments of the present invention, the usually hidden diagnostics part of an e-mail is rendered visible in a user-friendly way for use in a convenient manner whilst bringing a high level of security for the recipient and providing an opportunity for the sender to gain information about phishing attempts made against recipients to whom the sender might normally send e-mail.

Advantageously, according to a preferred embodiment, at least a part of the header of an e-mail may be used to generate information which may include cryptographically signed information, signed using a cryptographic key of the sender, to generate an optical machine-readable data representation, which may then be embedded into the body of the e-mail. In other embodiments, the code may be embedded in the header of the e-mail.

## Claims

1. A computer implemented method for sending a trustable e-mail to at least one recipient, the trustable e-mail having a content including: a message section comprising a subject-matter for communicating to the recipient; and a header section comprising at least information allowing for the trustable e-mail to be identified; the method comprising:
generation of an optical machine-readable data representation by a computing system of the sender, said generation being parameterised according to a configuration profile stored in a memory accessible to the computing system of the sender, the configuration profile comprising one or more instructions to cause at least a part of said header section of the trustable e-mail to be encoded in the optical machine-readable data representation;
embedding, by the computing system of the sender, the optical machine-readable data representation in the trustable e-mail before said sending; and
logging the thus sent trustable e-mail on a storage device accessible to the computing system of the sender, said log at least identifying the trustable e-mail and the configuration profile.

2. The method according to claim 1, wherein said optical machine-readable data representation is embedded into the message section of the e-mail.

3. The method according to claim 1, wherein said optical machine-readable data representation is embedded into the header section of the e-mail.

4. The method according to any of the preceding claims, wherein said generation of the optical machine-readable data representation is further based on a cryptographic key pertaining to the sender or to the computing system of the sender.

5. The method according to claim 4, wherein said cryptographic key is a private key of a cryptographically related pair of private and public cryptographic keys, the recipient having access to the corresponding public cryptographic key.

6. The method according to any of the preceding claims, wherein the optical machine-readable data representation is one from: a one-dimensional barcode; a two-dimensional barcode; a data matrix; and machine-readable text.

7. A computer implemented method for verifying whether an e-mail is a trustable e-mail sent using the method according to any of claims 1 to 6, the method comprising:
retrieving, by a computing system of the sender, a log of a previously sent e-mail as referenced in a message received from a recipient of the e-mail, said message comprising data decoded, by a computing system of a recipient of the e-mail, from an optical machine-readable data representation embedded in the e-mail; and
verifying, by the computing system of the sender, whether at least a part of said decoded data matches at least a part of the header section of the referenced previously sent e-mail.

8. The method according to claim 7, further comprising sending a message from the sender computing system to the recipient computing system to confirm that the e-mail is authentic if said verification is positive.

9. The method according to claim 7, further comprising alerting the recipient that the e-mail was not sent by the sender if said verification is negative.

10. The method according to any of claims 7, 8 or 9, further comprising decrypting at least a part of said decoded data, by the computing system of the sender, using a cryptographic key pertaining to the sender or to the computing system of the sender.

11. A computer implemented method for verifying whether an e-mail is a trustable e-mail sent by a sender using the method according to at least one from claims 1 to 6, the method comprising:
scanning and decoding an optical machine-readable data representation in the e-mail by a recipient of the e-mail using a recipient computing system;
sending at least a part of the decoded optical machine-readable data representation to the computing system of the sender;
retrieving, by the computing system of the sender, a log of a previously sent e-mail as referenced in the decoded optical machine-readable data representation; and
verifying, by the computing system of the sender, whether at least a part of said decoded data matches at least a part of the header section of the referenced previously sent e-mail.

12. The method according to claim 11, further comprising receiving a message from the sender computing system confirming that the e-mail is authentic if said verification is positive.

13. The method according to claim 11, further comprising receiving a message from the sender computing system warning that the e-mail is not a trustable e-mail sent by the sender if said verification is negative.

14. The method according to any of claims 11, 12 or 13, further comprising decrypting at least a part of said decoded data, by the computing system of the sender, using a cryptographic key pertaining to the sender or to the computing system of the sender.
